# EUROPEAN PATENT SPECIFICATION

(11) **EP 0 288 571 B1**
(45) Date of publication and mention of the grant of the patent: **29.12.1993**
(21) Application number: 87906605.8
(22) Date of filing: 12.10.1987
(51) Int. Cl.: G11B 27/00

(54) **APPARATUS FOR RECORDING AND REPRODUCING DATA USING A DISK**
GERÄT ZUR DATENAUFZEICHNUNG UND WIEDERGABE MITTELS EINER PLATTE
APPAREIL D'ENREGISTREMENT ET DE REPRODUCTION DE DONNEES AU MOYEN D'UN DISQUE

(30) Priority: 16.10.1986 JP 246141/86
(43) Date of publication of application: 02.11.1988
(73) Proprietor: SONY CORPORATION, Tokyo 141 (JP)
(72) Inventor: YOSHIDA, Tadao Sony Corporation, Shinagawa-ku Tokyo 141 (JP); FUJIIE, Kazuhiko Sony Corporation, Shinagawa-ku Tokyo 141 (JP); ANDO, Ryo Sony Corporation, Shinagawa-ku Tokyo 141 (JP)
(74) Representative: TER MEER STEINMEISTER & PARTNER GbR
(86) International application number: PCT/JP87/00764
(87) International publication number: WO 88/02917

(56) References cited:
- EP-A- 0 029 946
- EP-A- 0 074 841
- EP-A- 0 164 131

## Description

This invention relates to an apparatus for recording and reproducing data using a disk on which information concerning music pieces can be recorded.

There is known as so-called compact disk, i. e. an optical disk on which all pieces of music are recorded end to end. In case of a usual reproduction, the reproducing operation is continued after the end of the reproduction of an actual piece of music such that the following piece of music is directly reproduced after the actual piece of music. The pieces of music are recorded in a data recording region, whereas information concerning the start points of the respective pieces of music are recorded in a TOC section. A selected piece of music, e. g. the third recorded piece of music, can be reproduced directly from its start position by reading the start time information associated to said selected piece of music from said TOC section.

A compact disk is dedicated only to reproduction. In contrast, EP-A-0 164 131 describes an apparatus which is not only arranged to reproduce data, but also to record data. This apparatus records information on the cumulative recording time within the TOC section of a disk. When inserting a disk into the apparatus, this information is read, to continue recording from the position indicated by said cumulative recording time.

When a new piece of music is recorded onto an already filled disk with the just mentioned apparatus, there arises the problem that there may be a time delay between the start time of this piece of music and the end time of the preceding piece. Another time delay may be present between the end time of this piece of music and the following piece. In the case of continuous reproduction, as used in prior art apparatuses for reproducing compact disks, the original pieces of music remaining in sections corresponding to said time delays are reproduced.

It is an object of the present invention to provide an apparatus for recording and reproducing data using a disk, which apparatus is arranged to reproduce pieces of music continuously without reproducing fragments of pieces of music which are existent between the end position of a complete piece of music and the start position of the following complete piece of music.

The apparatus of the present invention comprises:
- music recording means for recording pieces of music within said data recording region;
- TOC recording means for recording within said TOC section start time information concerning respective pieces of music;
- music reproducing means; and
- TOC reproducing means; and is characterized in that
- said TOC recording means is arranged to further record within said TOC section end time information concerning said respective pieces of music;
- said TOC reproducing means is arranged to reproduce said start time information and said end time information; and
- said music reproducing means is arranged to
   -- recognize by said end time information that the end position of an actually reproduced music piece is reached;
   -- detect by said start time information the start position of the following music piece; and
   -- start, only with a small time delay after the end time of said actually reproduced piece of music, reproduction of said following piece of music from its start position.

It is evident from the functions of the different means that the apparatus of the present invention reproduces one complete piece of music after the other without reproducing fragments of pieces of music remaining between complete pieces of music. Preferably, the music reproducing means is arranged to calculate the time period between the end time of the actually reproduced piece of music and the start time of the next piece of music, and to continue reproduction in case that said time period is smaller than a fixed time period, e. g. three seconds, otherwise to shift a reproduction head fast to the start position of the following piece of music.

Further features and advantages of the present invention will be understood from the following description of embodiments which are illustrated by figures.

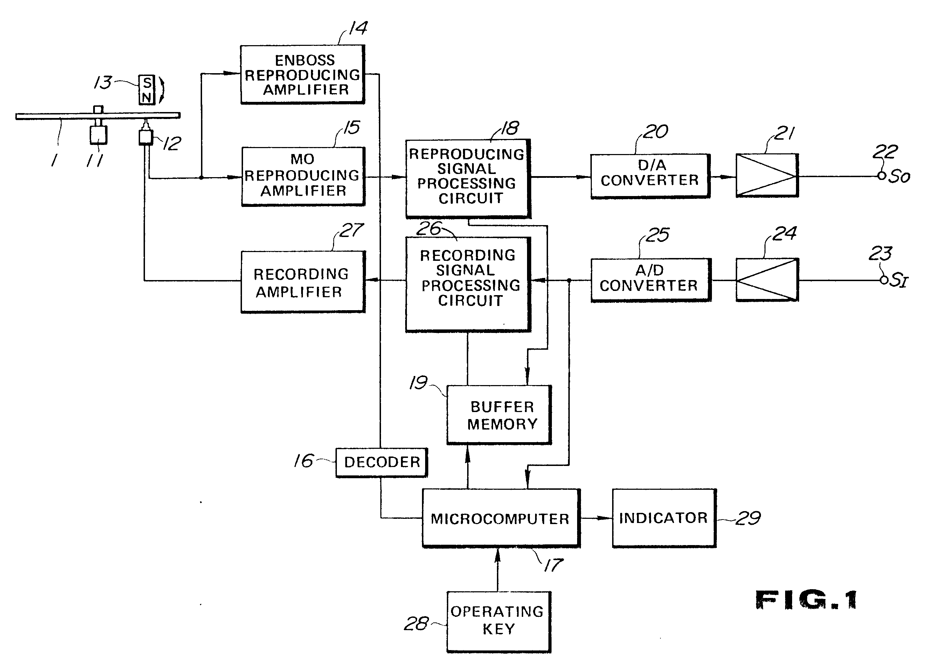

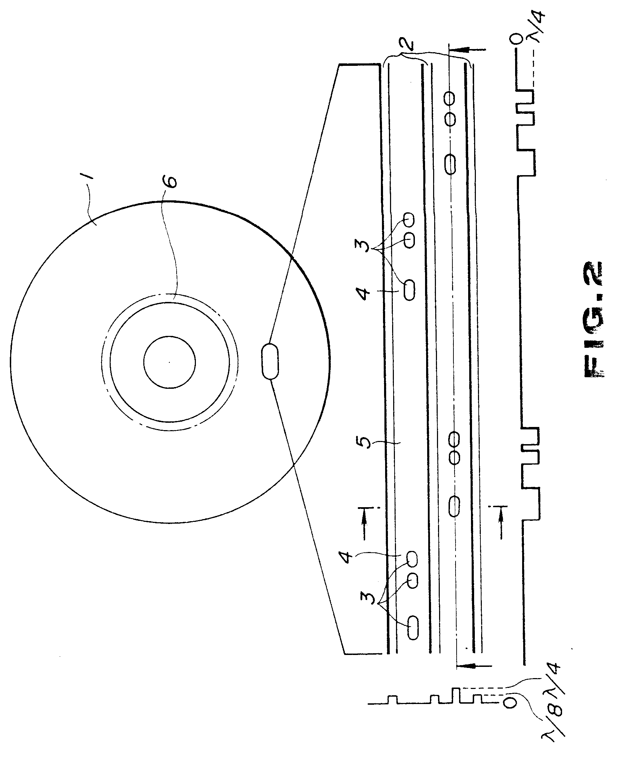

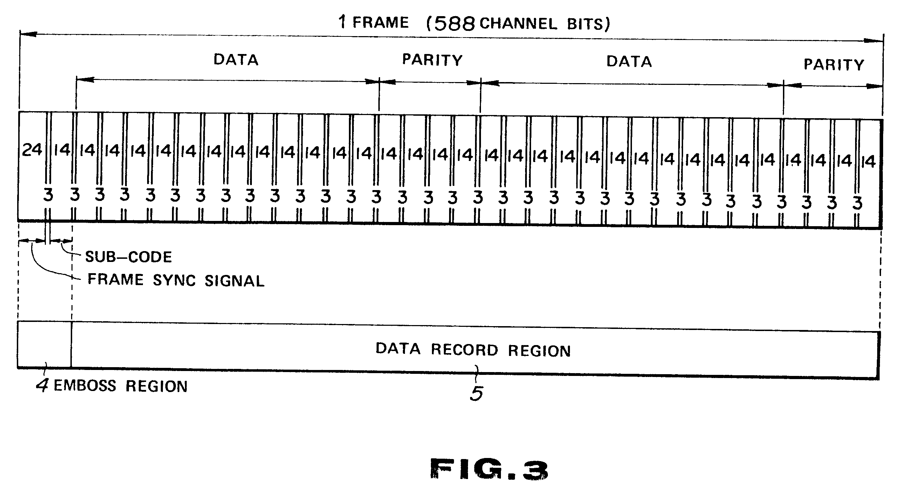

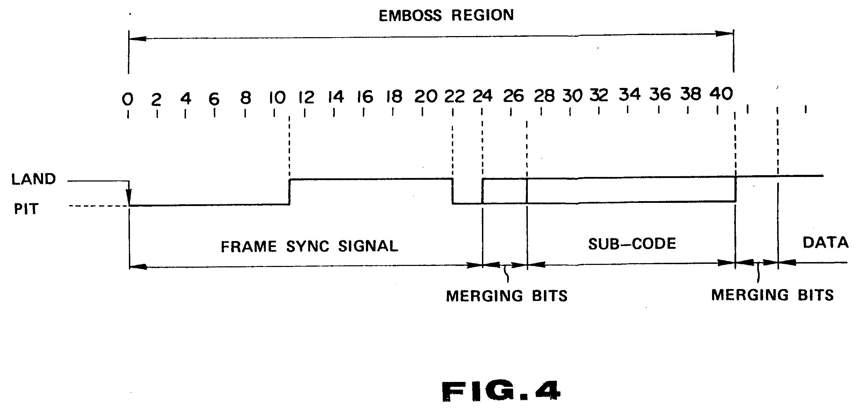

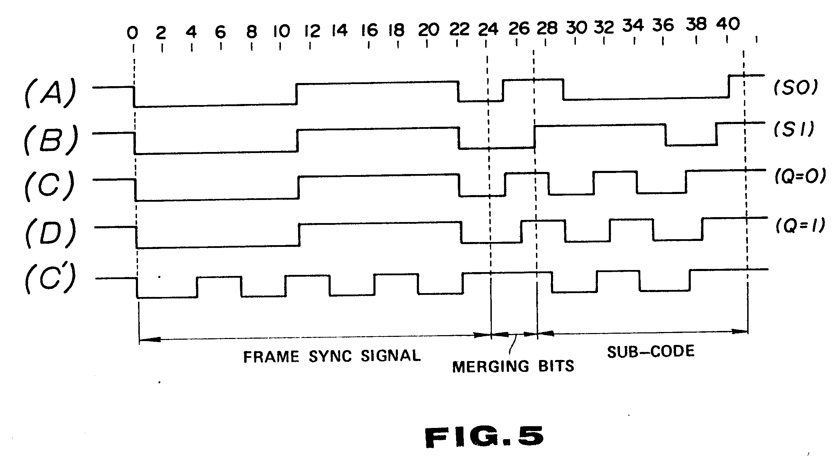

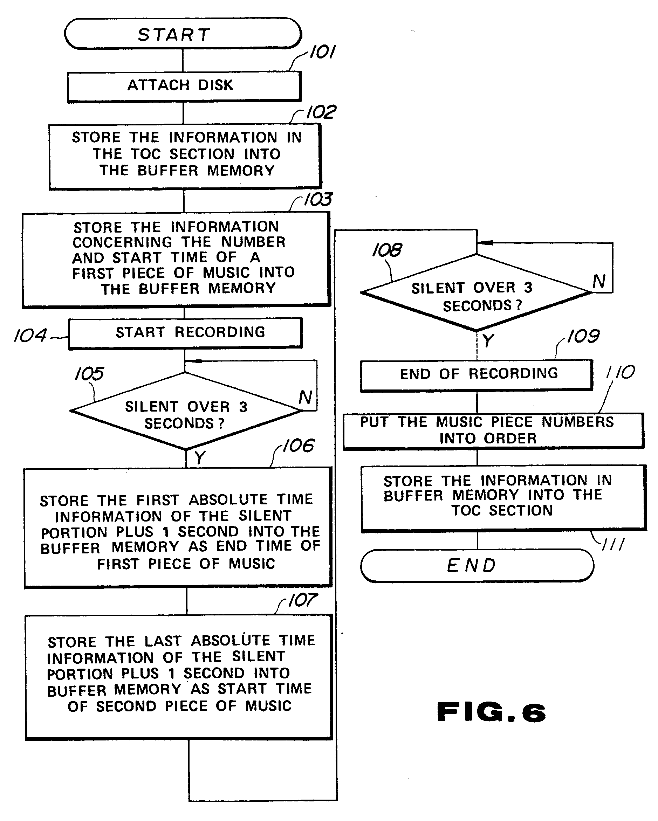

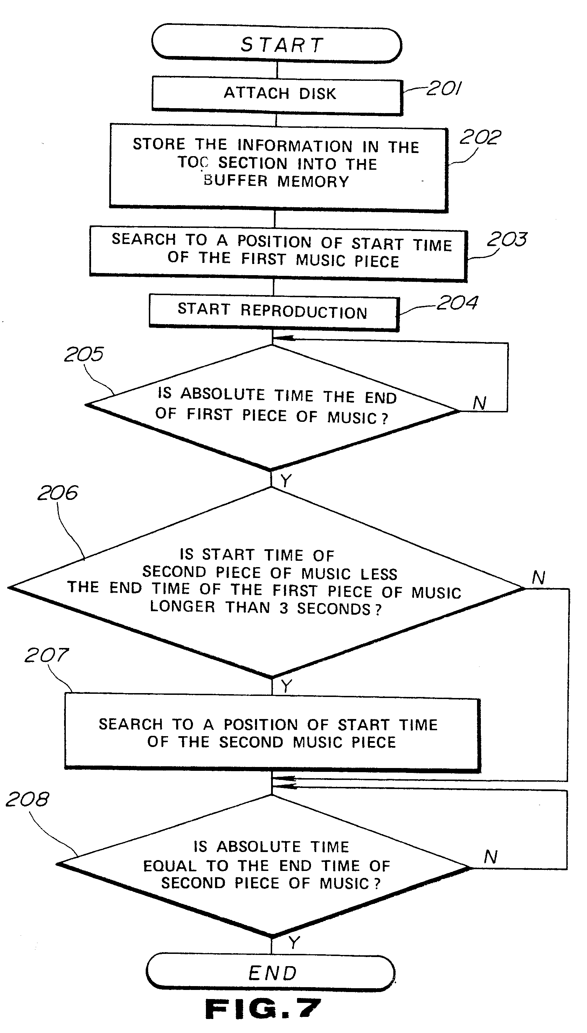

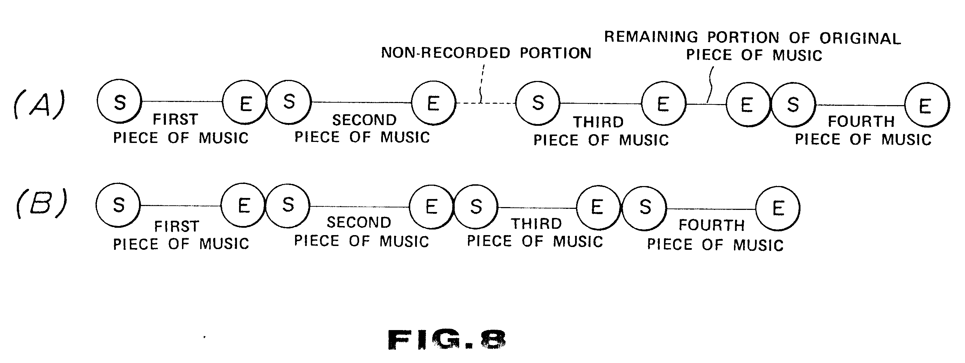

Fig. 1 is a block circuit diagram showing an embodiment of the apparatus for recording and reproducing data using a disk according to the present invention; Fig. 2 is a diagrammatic view showing a disk in the above embodiment and also showing a portion of the performance area thereof to an enlarged scale; Fig. 3 is a diagrammatic view showing the construction of data recorded in the emboss region and in the data record region; Fig. 4 is a diagrammatic view showing an example of the construction of a pattern of indentations in the emboss region; Fig. 5 is a diagrammatic view showing a practical example of the construction of the pattern of indentations; Fig. 6 is a flow chart for illustration of an example of the operation during the usual recording operation; Fig. 7 is a flow chart for illustrating the usual reproducing operation; and Fig. 8 is a diagrammatic view for illustration of the effect.

### Best Mode of Practicing the Invention

An embodiment of the present invention will be explained hereafter in detail by referring to the accompanying drawings.

A disk employed in the present embodiment will be explained first of all by referring to Fig. 2. In Fig. 2, the recording disk is an opto-magnetic disk, for example, having a diameter of 12 cm and provided with a perpendicular magnetized film exhibiting a magneto-optical effect, and is driven into rotation at a constant linear velocity (CLV). On the recording disk 1, there are spirally formed pre-grooves 2 each λ/8 deep, λ being the wavelength of the laser beam. On the lands between the adjacent pre-grooves 2, emboss regions 4 consisting of patterns of indentations by pits 3 and data recording regions 5 on which an opto-magnetic recording is performed, are alternately formed at the respective equal pitches and along the circumferential direction of the disk. The pit 3 has a depth of λ/4.

The construction of a frame defined by the compact disk format is shown in Fig. 3. Each frame is composed of 588 channel bits and formed by data modulated by EFM or eight to fourteen modulation system. Thus each frame is composed of a 24-bit frame sync signal, a 14-bit or 1-symbol sub-code and 14x32 bit or 32 symbol data and parity codes, such as the information of musical performance or play. The respective symbols are connected by merging bits each consisting of 3 bits, so that the sum-total of the bits is 588.

Among the data constituting the aforementioned one frame, the frame sync signals and the sub-codes are recorded previously in the form of patterns of indentations on the emboss region 4 while the data such as performance information and the parity codes are photomagnetically recorded in the aforementioned data recording region 5. As described later on, the sub-codes previously recorded in the emboss region 4 are only the Q-channel sub-codes and, furthermore, only the absolute time information from the beginning to the end of the performance area.

On the lead-in portion towards the more inner side than the performance area of the disk 1, there is provided a table of contents or TOC section 6 on which can be recorded the information concerning the number of each musical piece, the start time and the end time based on the aforementioned absolute time information. Opto-magnetic recording is naturally performed on this TOC section 6. The emboss regions 4 composed of the aforementioned patterns of indentations are also provided on the lead-in portion exclusive of the TOC section 6 to make possible starting from the lead-in portion of the CLV servo adapted for rotationally driving the recording disk 1 at the constant linear velocity. The CLV servo will be described later on.

An example of the construction of the patterns of indentations in the emboss region 4 will now be explained by referring to Fig. 4. It is the frame sync signal and the sub-code inclusive of 3 merging bits and thus formed by 41 bits, that are recorded as the pattern of identations on the emboss region. The 1st to 24th bits represent a frame sync signal which is constituted by a pattern of indentations of 11T-11T-2T according to the format for a compact disk, wherein T designates a period of channel clocks (4.32 MHz). The 25th to 27th bits and the 28th to 41st bits represent merging bits and the sub-codes, respectively. The sub-code recorded herein is only the Q-channel sub-code and furthermore only the absolute time information from the beginning to the end of the performance area. More particularly, it is the 14 bits that are recorded as the sub-codes, but it is only the Q-channel and, furthermore, only the absolute time information, that is desired to be recorded as the information. The absolute time information consists of minute (AMIN), second (ASEC) and frame (AFRAME).

The forward rising portion of the emboss region is sensed by an optical pickup, the detection output of which is used for phase comparison of the PLL circuit and the CLV servo for rotationally driving the disk at the constant linear velocity. The CLV servo is performed on the basis of the detected rising portion so that the servo with high precision and reliability can be achieved. The rising portion is so important in this manner that the leading portion of the frame sync signal corresponding to the first bit of the emboss region should necessarily be formed as the pit. Thus, while a pattern of indentations opposite to the one shown herein may be envisaged according to the format of the compact disk, it is necessary to adopt a pattern beginning with a pit if a pattern of 11T-11T-2T is employed.

The 3-bit merging bits following the sub-codes are necessarily formed as the land, in order that, when the ends of the pits are intruded into the land portions (merging bits) due for example to the response delay, the effect of such intrusion will be absorbed at the merging bits to prevent the situation that the data recording region where the opto-magnetic recording is performed is affected by the code-to-code interference. Also, since it is prescribed by the compact disk format that the pit portion and the land portion be 3T and 11T, respectively, it is necessary that the shortest duration of the pits occasionally existing at the rear end of the emboss region be 3T. The merging bits between the frame sync signals and the sub-codes are determined in consideration of the above mentioned 3T-11T rule.

Since only the Q-channel suffices for the aforementioned sub-code, it suffices in effect that patterns corresponding to Q=0, Q=1 be selected from among the 128 patterns. In this manner, a pattern with the maximum clock (bit clock) component can be selected. As an example, the emboss region in its entirely can be formed only by four patterns shown in Figs. 5A to 5D. Thus the block sync signals S0, S1 of the sub-code are constituted by the patterns of indentations as shown at A and B in Fig. 5, respectively. The cases Q=0 and Q=1 are constituted by the patterns of indentations as shown at C and D in Fig. 5, respectively. For the cases Q=0 and Q=1, patterns including repetitions of 3T are used in order that the clock component will become maximum. It is noted that the same pattern for the frame sync signal is used in common to the above cases.

Moreover, when the frame sync signal could be identified by the rising portion of the emboss region, the frame sync signal need not be formed in accordance with the 11T-11T-2T pattern, but may be formed by the patterns including repetitions of 3T. The pattern for the case Q=0 shown at C in Fig. 5 is shown at C' in Fig. 5. In this manner, the number of the clock components can be increased with increased merit for clock reproduction and increased facility in the construction of the PLL circuit adapted for bit demodulation. In such case, however, when the repetitive 3T patterns are detected, these need be converted into the pattern of 11T-11T-2T before they are supplied to an FEM decoder. It is to be noted that the pattern of the merging bits in Fig. 5C differs from that in Fig. 5C'.

The construction of the disk recording/reproducing apparatus adapted for recording and/or reproducing audio signals using the above described recording disk 1 will be explained by referring to Fig. 1. In Fig. 1, the recording disk 1 is driven into rotation at a constant linear velocity by an electric motor 11. The optical head 12 is formed by optical components such as a laser diode, photo-detector, lens or a half mirror, and adapted for recording and/or reproducing the information upon irradiation of the recording disk 1 with a laser beam. On the opposite side of the recording disk 1 with respect to the optical head 12, there is provided a magnet 13 for applying an external magnetic field. The magnet 13 is controlled so that the direction of the magnetic poles thereof is reversed for era sure and recording.

The signal portion of the RF signals (high frequency signals) that is read from the optical head 12 and that is associated with the emboss region 4, is supplied to an emboss reproducing amplifier 14. The signal portions associated with the aforemntioned TOC section 6 and the data recording region 5 on which the opto-magnetic recording is performed are supplied to a MO reproducing amplifier 15. The-absolute time information or absolute address information from the emboss reproducing amplifier 14 is decoded in a decoder 16 before it is transmitted to a micro-computer 17. The output from the MO reproducing amplifier 15 is transmitted to a reproducing signal processing circuit 18 where it is processed in a predetermined manner. The information stored in the TOC section 6, that is, the information concerning the number of each piece of music and the start time and end time based on the absolute time information is transmitted from the processing circuit 18 to a buffer memory 19 used as the memory element. The above information is transcribed in the buffer memory 19 at the time of attachment of the disk 1. The performance information recorded in the data recording region 5 is transmitted from the reproducing signal processing circuit 18 to a digital to analog or D/A converter 20 where it is converted into the analog form so as to be outputted at a terminal 22 via buffer amplifier 21 as the reproducing audio signal S₀.

For recording, audio signals S₁ to be recorded are supplied to a terminal 23. These signals S₁ are transmitted via buffer amplifier 24 to an analog to digital or A/D converter 25 where they are converted into the corresponding digital signals. The performance information from the A/D converter 25 is transmitted to a recording signal processing circuit 26 where it is processed in a predetermined manner before it is transmitted via recording amplifier 27 to the optical head 12 so as to be recorded in the data recording region 5 of the disk 1. During this recording, the output from the A/D converter 25 is transmitted to a micro-computer 17 where the presence or absence of the recording signals, that is, the presence or absence of the silent portions between the musical pieces, is detected automatically. Based on the results of detection of the silent portions, the information concerning the numbers of the musical pieces and the start time and end time based on the aforementioned absolute time information is written in the buffer memory 19. Such information can also be written manually in the buffer memory 19 by an operating key 28. An indicator 29 is adapted for indicating the numbers of the musical pieces, the start time and the end time as well as indicating the length of the recordable unrecorded portion or portions on the disk 1, that is, the length of the residual recording time.

In the present embodiment, the information concerning the numbers of musical pieces stored in the buffer memory 19 is put into order by the microcomputer 17 immediately before the disk 1 is taken out of the apparatus, and the aforementioned information is transmitted from the buffer memory 19 through the recording signal processing circuit 26 and the recording amplifier 27 to the optical head 12 so as to be recorded in the TOO section 6 of the disk 1.

It is to be noted that the absolute time information provided by the emboss region 4 of the disk 1 is also supplied to the microcomputer 17 during recording.

An example of the operation at the time of the usual recording will be explained by referring to the flow chart of Fig. 6. On attachment of the disk 1, the information already recorded in the TOC section 6 of the disk 1 is transcribed to the buffer memory 19 at steps 101 and 102. The information concerning the number as well as the start time of the first piece of music is then written into the buffer memory 19 at step 103 and the recording operation is started at step 104. It is then detected whether the silent portion continuing for not less than 3 seconds exists or not at step 105. The step 105 is repeatedly performed until the silent portion continuing for not less than 3 seconds is found. On detection of the silent portion, the first absolute time information of the silent portion, that is, the start time of the silent portion plus one second, is adopted as the end time of the first piece of music, and the information is written in the buffer memory 19 at step 106. The last absolute time information of the silent portion, that is, the end time of the silent portion less one second is adopted as the start time of the second piece of music and written into the buffer memory 19 along with the information concerning the number of the second piece of music at step 107 and the recording of the second piece of music is performed continuously. Then it is detected whether the silent portion continuing for not less than 3 seconds exists or not, at step 108, in the same way as at step 105. The operation similar to that performed for the first piece of music is performed for the second piece of music et seq. After the end of recording at step 109, the numbers of the musical pieces stored in the buffer memory 19 are put into order at step 110. By the putting into order of the numbers of the musical pieces is meant deleting the double indication of the numbers of the musical pieces in case the recording is newly made on the recorded disk and deleting the preceding musical piece devoid of the leading or beginning portion from registration. Also the numbers of the musical pieces are arranged in the order of the increasing absolute time information data associated with the recorded portions. After the numbers of the musical pieces are put into order, the information in the buffer memory 19 is recorded in the TOC section 6 of the disk 1 at step 111.

An example of the usual reproducing operation is now explained by referring to the flow chart of Fig. 7. On attachment of the disk 1, the information already recorded in the TOC section 6 of the disk 1 is transcribed into the buffer memory 19 at steps 201 and 202. Then a search is made to the position of the start time for the first piece of music at step 203 and the reproducing operation is started at step 204. It is then detected whether the current absolute time information coincides with the information of the end time of the first musical piece at step 205. This step 205 is repeated until the coincidence is detected. Upon detection of such coincidence, it is determined whether the difference between the start time of the second musical piece and the end tame of the first musical piece exceeds 3 seconds at step 206. In case such difference exceeds 3 seconds, a search is made to the position of the start time for the second piece of music at step 207. In case the difference does not exceed 3 seconds, the second musical piece is reproduced on end without searching. It is then detected whether the current absolute time information coincides with the information of the end time of the second musical piece at step 208. The processing similar to that for the first musical piece is performed for the second musical piece et seq.

More precisely, the following results, for example, are achieved. It is now assumed that four pieces of music are recorded on the disk 1 in accordance with the pattern shown at A in Fig. 8. An unrecorded portion exists between the second and the third pieces, while a portion of the precedingly recorded piece of music is left between the third and fourth pieces of music as a result of the overlapped recording of the third piece of music. In the figure, S and E denote the start time or start point and the end time or end point of the piece of music, respectively. Even when recording is made in this manner on the disk, it is possible with the above described recording/reproducing apparatus to reproduce the first to fourth musical pieces continuously, as though there were no unrecorded portion original or remaining portion of the precedingly recorded piece of music on the disk, as shown at B in Fig. 8. This is naturally made possible by searching the positin of the next piece of music while jumping over the unrecorded or remaining portion of the precedingly recorded piece of music.

Although not shown in the flow chart of Fig. 6, the length of the unrecorded and recordable portion on the disk 1 (the remaining time) is indicated on an indicator 29 and the high-speed searching is made to the beginning part of the unrecorded portion, before proceed to the recording (sound recording), so that the unrecorded portion can be located more promptly and efficiently without expending time and labour. A more complicated control operation becomes necessary to perform when there exist a plurality of unrecorded portions. For utmost simplicity, it suffices that the largest of the recorded end time information data be assumed to be the beginning of the unrecorded portion.

In the above described embodiment, the information concerning the start time and the end time for each piece of music is based on the absolute time information previously recorded on the emboss region 4 of the disk 1. However, as for the end time, the time information based on the time involved since the beginning until the end of the musical piece at the time of recording the information of the musical performance or the like may be adopted as such end time.

## Claims

1. An apparatus for recording and reproducing data using a disk (1) including a TOC section (6) and a data recording region, whereby absolute time information is prerecorded at least within said data recording region, said apparatus comprising:
- music recording means for recording pieces of music within said data recording region;
- TOC recording means for recording within said TOC section start time information concerning respective pieces of music;
- music reproducing means; and
- TOC reproducing means;
**characterized in that**
- said TOC recording means is arranged to further record within said TOC section end time information concerning said respective pieces of music;
- said TOC reproducing means is arranged to reproduce said start time information and said end time information; and
- said music reproducing means is arranged to
-- recognize by said end time information that the end position of an actually reproduced music piece is reached;
-- detect by said start time information the start position of the following music piece; and
-- start, only with a small time delay after the end time of said actually reproduced piece of music, reproduction of said following piece of music from its start position.

2. An apparatus according to claim 1, **characterized in** that said music reproducing means is arranged to calculate the time period between the end time of the actually reproduced piece of music and the start time of the following piece of music, and to continue reproduction in case that said time period is smaller than a fixed time period, otherwise to shift a reproduction head fast to the start position of the following piece.

3. An apparatus according to one of the claims 1 or 2, **characterized in that** said TOC recording means is arranged to detect the start point and the duration of a period of silence when recording an actual piece of music, to detect whether said duration exceeds a first predetermined time period, and to write information concerning the end time of said actually recorded piece of music into said TOC section based on the information of the start point of said period of silence.

4. An apparatus according to claim 3, **characterized in that** said TOC recording means is arranged to record as said end time of said actually recorded piece of music said start point of said period of silence plus a second predetermined time period shorter than said first predetermined time period.

5. An apparatus according to one of the claims 1 to 4, **characterized in that**
- it comprises a memory;
- said TOC reproducing means is arranged to write said TOC information into said memory when inserting a disk into said apparatus;
- said music recording means is arranged to write said start time information and said end time information into said memory;
- said music reproducing means is arranged to read said start time information and said end time information from said memory; and
- said TOC recording means is arranged to read said start time information and said end time information from said memory, and to record said information within said TOC section when said disk shall be removed from said apparatus.

## Patentansprüche

1. Gerät zum Aufzeichnen und Wiedergeben von Daten mittels einer Platte (1) mit einem TOC-Abschnitt (6) und einem Datenaufzeichnungsbereich, wobei Absolutzeitinformation zumindest innerhalb des Datenaufzeichnungsbereichs vorab aufgezeichnet ist, welches Gerät folgendes aufweist:
- eine Musikaufzeichnungseinrichtung zum Aufzeichnen von Musikstücken innerhalb des Datenaufzeichnungsbereichs;
- eine TOC-Aufzeichnungseinrichtung zum Aufzeichnen von Startzeitpunktinformation betreffend jeweilige Musikstücke innerhalb des TOC-Abschnitts;
- eine Musikwiedergabeeinrichtung; und
- eine TOC-Wiedergabeeinrichtung;
**dadurch gekennzeichnet,** daß
- die TOC-Aufzeichnungseinrichtung so ausgebildet ist, daß sie ferner Endzeitpunktinformation betreffend die jeweiligen Musikstücke im TOC-Abschnitt aufzeichnet;
- die TOC-Wiedergabeeinrichtung so ausgebildet ist, daß sie die Startzeitpunktinformation und die Endzeitpunktinformation wiedergibt; und
- die Musikwiedergabeeinrichtung so ausgebildet ist, daß sie
-- durch die Endzeitpunktinformation erkennt, daß die Endposition eines aktuell wiedergegebenen Musikstücks erreicht ist;
-- durch die Startzeitpunktinformation die Startposition des folgenden Musikstücks ermittelt; und
-- die Wiedergabe des folgenden Musikstücks ab dessen Startposition nur mit einer kleinen Zeitverzögerung nach dem Endzeitpunkt des aktuell wiedergegebenen Musikstücks startet.

2. Gerät nach Anspruch 1, **dadurch gekennzeichnet,** daß die Musikwiedergabeeinrichtung so ausgebildet ist, daß sie die Zeitspanne zwischen dem Endzeitpunkt des aktuell wiedergegebenen Musikstücks und dem Startzeitpunkt des folgenden Musikstücks berechnet, und die Wiedergabe dann fortsetzt, wenn diese Zeitspanne kleiner als eine festgelegte Zeitspanne ist, andernfalls den Wiedergabekopf schnell zur Startposition des folgenden Stücks verschiebt.

3. Gerät nach einem der Ansprüche 1 oder 2, **dadurch gekennzeichnet,** daß die TOC-Aufzeichnungseinrichtung so ausgebildet ist, daß sie den Startzeitpunkt und die Dauer einer tonlosen Periode ermittelt, wenn sie ein aktuelles Musikstück aufzeichnet, um zu ermitteln, ob die Dauer eine erste vorgegebene Zeitspanne überschreitet, und um Information betreffend den Endzeitpunkt des aktuell aufgezeichneten Musikstücks in den TOC-Abschnitt auf Grundlage der Information für den Startzeitpunkt der tonlosen Periode einzuschreiben.

4. Gerät nach Anspruch 3, **dadurch gekennzeichnet,** daß die TOC-Aufzeichnungseinrichtung so ausgebildet ist, daß sie als Endzeitpunkt des aktuell aufgezeichneten Musikstücks den Startzeitpunkt der tonlosen Periode zuzüglich einer zweiten vorbestimmten Zeitspanne aufzeichnet, die kürzer ist als die erste vorgegebene Zeitspanne.

5. Gerät nach einem der Ansprüche 1 bis 4, **dadurch gekennzeichnet,** daß
- es einen Speicher aufweist;
- die TOC-Wiedergabevorrichtung so ausgebildet ist, daß sie die TOC-Information in den Speicher einschreibt, wenn eine Platte in das Gerät eingelegt wird;
- die Musikaufzeichnungseinrichtung so ausgebildet ist, daß sie die Startzeitpunktinformation und die Endzeitpunktinformation in den Speicher einschreibt;
- die Musikwiedergabeeinrichtung so ausgebildet ist, daß sie die Startzeitpunktinformation und die Endzeitpunktinformation aus dem Speicher ausliest; und
- die TOC-Aufzeichnungseinrichtung so ausgebildet ist, daß sie die Startzeitpunktinformation und die Endzeitpunktinformation aus dem Speicher ausliest und diese Information im TOC-Abschnitt aufzeichnet, wenn die Platte dem Gerät entnommen werden soll.

## Revendications

1. Appareil pour enregistrer et reproduire des données au moyen d'un disque (1) incluant une partie TOC (6) et une zone d' enregistrement de données au moyen duquel des informations de temps absolu sont préenregistrées au moins dans ladite zone d'enregistrement de données, ledit appareil comprenant:
un moyen d'enregistrement de musique pour enregistrer des morceaux de musique dans ladite zone d'enregistrement de données;
un moyen d'enregistrement TOC pour enregistrer dans ladite partie TOC des informations de temps de début concernant les morceaux de musique respectifs;
un moyen de reproduction de musique; et,
un moyen de reproduction TOC;
caractérisé en ce que
ledit moyen d'enregistrement TOC est agencé pour enregistrer en outre dans ladite partie TOC des informations de temps de fin concernant les morceaux de musique respectifs;
ledit moyen de reproduction TOC est agencé pour reproduire lesdites informations de temps de début et lesdites informations de temps de fin ; et
ledit moyen de reproduction de musique est agencé pour :
reconnaître au moyen desdites informations de temps de fin que la position de fin d'un morceau de musique en cours de reproduction est atteinte;
détecter au moyen desdites informations de temps de début la position de début du morceau de musique suivant; et
commencer avec seulement un petit retard après le temps de fin dudit morceau de musique en cours de reproduction la reproduction dudit morceau de musique suivant à partir de sa position de début.

2. Appareil selon la revendication 1, caractérisé en ce que ledit moyen de reproduction de musique est agencé pour calculer la période de temps entre le temps de fin du morceau de musique en cours de reproduction et le temps de début du morceau de musique suivant, et pour continuer la reproduction dans le cas où ladite période de temps est inférieure à une période de temps fixe, et autrement pour décaler vite une tête de reproduction jusqu'à la position de début du morceau suivant.

3. Appareil selon l'une quelconque des revendications 1 et 2, caractérisé en ce que ledit moyen d'enregistrement TOC est agencé pour détecter le point de début et la durée d'une période de silence quand un morceau de musique est en cours d'enregistrement, pour détecter si ladite durée dépasse une première période de temps prédéterminée,et pour écrire des informations concernant le temps de fin dudit morceau de musique en cours d'enregistrement dans ladite partie TOC selon les informations du point de début de ladite période de silence.

4. Appareil selon la revendication 3, caractérisé en ce que ledit moyen d'enregistrement TOC est agencé pour enregistrer commedit temps de fin dudit morceau de musique en cours d'enregistrement ledit point de début de ladite période de silence plus une seconde période de temps prédéterminée plus courte que ladite première période de temps prédéterminée.

5. Appareil selon l'une quelconque des revendications 1 à 4, caractérisé en ce que
il comprend une mémoire;
ledit moyen de reproduction TOC est agencé pour écrire lesdites informations TOC dans ladite mémoire quand un disque est inséré dans ledit appareil;
ledit moyen d'enregistrement de musique est agencé pour écrire lesdites informations de temps de début et lesdites informations de temps de fin dans ladite mémoire;
ledit moyen de reproduction de musique est agencé pour lire lesdites informations de temps de début et lesdites informations de temps de fin dans ladite mémoire; et
ledit moyen d'enregistrement TOC est agencé pour lire lesdites informations de temps de début et lesdites informations de temps de fin dans ladite mémoire, et pour enregistrer lesdites informations dans ladite partie TOC quand ledit disque doit être retiré dudit appareil.
